# FASCICULE DE BREVET EUROPEEN

(11) **EP 1 607 296 B1**
(45) Date de publication et mention de la délivrance du brevet: **08.11.2006**
(21) Numéro de dépôt: 05291242.5
(22) Date de dépôt: 09.06.2005
(51) Int. Cl.: B60T 7/10, B60T 13/74, B60T 11/04

(54) **Frein secondaire électrique de véhicule automobile incluant un dispositif à retour d'effort**
Elektrische Zweitbremse für ein Fahrzeug, mit Kraftrückführungsanordnung
Secondary electric vehicle brake, including a force returning device

(30) Priorité: 16.06.2004 FR 0406524
(43) Date de publication de la demande: 21.12.2005
(73) Titulaire: Peugeot Citroën Automobiles S.A., 78140 Vélizy Villacoublay (FR)
(72) Inventeur: Martel, Philippe, 78530 Buc (FR)
(74) Mandataire: Thinat, Michel

(56) Documents cités:
- EP-A- 0 972 690
- FR-A- 2 761 654

## Description

L'invention concerne un frein secondaire électrique de véhicule automobile, comprenant un actionneur électrique incluant une partie mobile que cet actionneur déplace selon une direction dite de serrage lorsqu'il est sollicité pour serrer le frein, une palette pouvant être déplacée par un utilisateur entre une position de repos et une position de serrage dans laquelle elle sollicite électriquement l'actionneur pour qu'il serre le frein.

L'invention concerne également un système de commande comprenant une palette pouvant être déplacée entre une position de repos et une position active dans laquelle elle sollicite électriquement un actionneur, et un actionneur incluant une partie mobile qu'il déplace selon une direction prédéterminée lorsqu'il est sollicité. Le document FR 2 761 654 divulge les préambules des revendications 1 et 20.

De façon générale, un frein secondaire est un dispositif de commande parallèle à la commande hydraulique de frein principal, il comprend notamment des câbles transmettant un effort de serrage vers des récepteurs de freins intégrant une commande mécanique parallèle à la commande hydraulique.

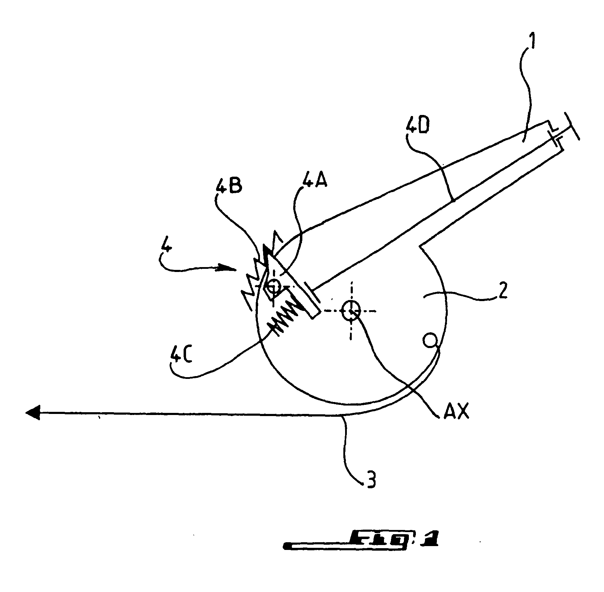

Les freins secondaires classiques, dits "frein à main" tels que celui qui est représenté sur la figure 1, comprennent une palette 1, ou poignée, solidaire en rotation d'une poulie 2, en association avec un câble de frein 3 qui s'enroule sur cette poulie.

Le contrôle du dosage de l'effort de freinage est réalisé par l'utilisateur qui perçoit directement l'effort qu'il applique au câble de frein lorsqu'il tire sur la palette.

Un dispositif à cliquet 4 réalise le blocage en position serrée de l'ensemble constitué par la palette et la poulie. Ce dispositif comprend un cliquet 4A escamotable, solidaire de la poulie, qui est apte à dépasser de celle-ci pour la bloquer en s'engageant dans une denture correspondante 4B solidaire d'une partie fixe du véhicule.

Le cliquet 4A qui est maintenu en position sortie par un ressort 4C peut être escamoté par l'utilisateur au moyen d'un bouton de déblocage 4D qui agit sur le cliquet, à l'encontre du ressort, pour l'escamoter.

L'évolution actuelle conduit à des freins secondaires assistés électriquement, c'est-à-dire dans lesquels l'action de l'utilisateur sur la palette sollicite un actionneur électrique qui génère l'effort appliqué aux câbles de freins. L'utilisateur n'a ainsi pas à générer lui-même l'effort de serrage, comme dans les freins à main.

Les freins secondaires électriques actuels sont commandés au moyen d'une palette sous forme d'un interrupteur électrique du type bouton poussoir, que l'utilisateur enfonce pour activer le frein secondaire. Une carte électronique située entre la palette et l'actionneur électrique pilote cet actionneur pour qu'il applique aux câbles de freins un effort ayant une intensité adaptée à la situation dans laquelle se trouve le véhicule.

La carte électronique a besoin d'être relativement évoluée ;elle inclut un calculateur qui prend en compte différents paramètres, notamment pour détecter et identifier les situations critiques afin de doser en conséquence l'effort de freinage. De telles situations critiques sont par exemple un démarrage en côte ou un freinage avec le frein secondaire alors que le véhicule roule.

Cependant, le calculateur ne connaît pas nécessairement tous les paramètres permettant d'identifier avec précision les différentes situations critiques pouvant se présenter. Par conséquent, l'effort de freinage appliqué par l'actionneur n'est pas toujours dosé de manière appropriée.

Le but de l'invention est de proposer une commande de frein secondaire électrique permettant un dosage approprié de l'effort de freinage.

A cet effet, l'invention a pour objet un frein secondaire électrique de véhicule automobile, comprenant un actionneur électrique incluant une partie mobile que cet actionneur déplace selon une direction dite de serrage lorsqu'il est sollicité pour serrer le frein, une palette pouvant être déplacée par un utilisateur entre une position de repos et une position de serrage dans laquelle elle sollicite électriquement l'actionneur pour qu'il serre le frein, caractérisé en ce que la palette est liée à l'actionneur par un dispositif à retour d'effort, ce dispositif appliquant à la palette un effort tendant à la ramener en position de repos, cet effort étant d'autant plus important que la partie mobile occupe une position avancée dans la direction de serrage.

Selon une caractéristique de l'invention, le dispositif à retour d'effort est une chaîne de transmission de mouvement incluant un ressort de retour d'effort, cette chaîne de transmission de mouvement ayant une extrémité reliée mécaniquement à la partie mobile de l'actionneur, et une autre extrémité reliée mécaniquement à la palette.

Selon une autre caractéristique de l'invention, la chaîne de transmission de mouvement comprend un câble de retour d'effort ayant une première extrémité reliée à la palette et une seconde extrémité reliée au ressort de retour d'effort, le ressort de retour d'effort étant relié à la partie mobile de l'actionneur.

Selon une autre caractéristique de l'invention, la chaîne de transmission de mouvement comprend un câble de retour d'effort ayant une première extrémité reliée à la partie mobile de l'actionneur et une seconde extrémité reliée au ressort de retour d'effort, ce ressort de retour d'effort étant relié à la palette.

Selon une autre caractéristique de l'invention, le ressort de retour d'effort est relié à la palette par l'intermédiaire d'un second câble de retour d'effort.

Selon une autre caractéristique de l'invention, la chaîne de transmission de mouvement comprend un câble de retour d'effort ayant une première extrémité reliée à la palette et une seconde extrémité reliée à la partie mobile de l'actionneur, ce câble de retour d'effort étant engagé dans une gaine ayant une première extrémité en appui contre une partie fixe du véhicule et une seconde extrémité en appui contre une autre partie fixe du véhicule par l'intermédiaire du ressort de retour d'effort.

Selon une autre caractéristique de l'invention, la partie mobile peut être déplacée par l'actionneur selon une autre direction, dite direction de desserrage lorsque cet actionneur est sollicité pour desserrer le frein, et la palette peut être déplacée par l'utilisateur entre la position de repos et une position de desserrage dans laquelle elle sollicite électriquement l'actionneur pour qu'il desserre le frein.

Selon une autre caractéristique de l'invention, l'actionneur comprend un boîtier dans lequel sont montés un moteur et une vis sans fin liée en rotation à un arbre de ce moteur, et un curseur lié en mouvement à la vis sans fin par une liaison hélicoïdale, ce curseur étant lié à un câble de serrage du frein.

Selon une autre caractéristique de l'invention, le boîtier de l'actionneur est monté fixe par rapport au véhicule, et la partie mobile du servomoteur est formée par le curseur.

Selon une autre caractéristique de l'invention, le boîtier de l'actionneur est monté mobile pour constituer la partie mobile du servomoteur, ce boîtier étant en appui sur une partie fixe du véhicule par l'intermédiaire d'un ressort de serrage.

Selon une autre caractéristique de l'invention, le boîtier de l'actionneur est monté fixe par rapport au véhicule, la vis sans fin a une extrémité liée en mouvement à l'arbre du moteur par une liaison glissière, de sorte que cette vis sans fin peut se déplacer longitudinalement par rapport au boîtier tout en étant entraînée en rotation par le moteur, cette vis sans fin ayant son autre extrémité solidaire d'une buttée à billes qui est appui sur une partie fixe du véhicule par l'intermédiaire d'un ressort de serrage, et la partie mobile de l'actionneur est constituée par la butée à bille.

Selon une autre caractéristique de l'invention, le boîtier de l'actionneur est monté fixe par rapport au véhicule, le câble de serrage traverse une paroi du boîtier pour être relié au curseur, ce câble de serrage étant engagé dans une gaine de serrage ayant une extrémité en appui contre la paroi du boîtier par l'intermédiaire d'une butée mobile en appui sur le ressort de serrage pour le comprimer contre la paroi, la partie mobile étant formée par la butée mobile.

Selon une autre caractéristique de l'invention, le câble de retour d'effort est relié à la butée mobile par l'intermédiaire d'une plaque qui est solidarisée à la butée mobile par encliquetage.

Selon une autre caractéristique de l'invention, la butée mobile est reliée à une extrémité d'un palonnier et le câble de retour d'effort est relié à une autre extrémité de ce palonnier.

Selon une autre caractéristique de l'invention, l'actionneur est équipé de deux interrupteurs de fin de course aptes à couper l'alimentation électrique du moteur lorsque le curseur est en fin de course de serrage ou en fin de course de desserrage.

Selon une autre caractéristique de l'invention, le boîtier d'actionneur comprend un interrupteur de serrage et un interrupteur de desserrage actionnés par la palette pour solliciter l'actionneur, le câble de retour d'effort est relié à la butée à bille par l'intermédiaire d'une tige de retour d'effort et du ressort de retour d'effort qui sont situés à l'intérieur du boîtier, cette tige de retour d'effort comprenant un ergot apte à fermer l'interrupteur de serrage ou l'interrupteur de desserrage lorsqu'elle est déplacée longitudinalement dans le boîtier par le câble de retour d'effort lorsque l'utilisateur déplace la palette vers la position de serrage ou vers la position de desserrage.

Selon une autre caractéristique de l'invention, la chaîne de transmission de mouvement comprend un câble de retour d'effort ayant une première extrémité reliée à la partie mobile de l'actionneur et une seconde extrémité reliée au ressort de retour d'effort, ce ressort de retour d'effort étant relié à la palette par l'intermédiaire d'une liaison à butées coulissantes et d'un second câble de retour d'effort.

Selon une autre caractéristique de l'invention, la liaison à butées coulissantes comprend une butée fixe, une première butée coulissante fixée au ressort de retour d'effort et venant en appui contre la butée fixe lorsque la palette est en position de repos ou en position de desserrage, une seconde butée coulissante fixée en extrémité du second câble de retour d'effort, cette seconde butée coulissante coopérant avec la première butée coulissante pour la tirer lorsque la palette est déplacée vers sa position de serrage.

Selon une autre caractéristique de l'invention, le frein comprend un ressort de ressenti de desserrage comprimé entre la seconde butée coulissante et une partie fixe du véhicule, de telle sorte que ce ressort de ressenti de desserrage exerce sur la palette un effort tendant à la ramener vers sa position de repos lorsque celle-ci est déplacée vers sa position de desserrage.

L'invention concerne également un système de commande, comprenant une palette pouvant être déplacée par un utilisateur entre une position de repos et une position active dans laquelle cette palette sollicite électriquement un actionneur, un actionneur incluant une partie mobile qu'il déplace selon une direction prédéterminée lorsqu'il est sollicité, caractérisé en ce que la palette est lié en mouvement à la partie mobile par une chaîne de transmission de mouvement incluant un ressort de retour d'effort pour exercer sur la palette un effort tendant à la ramener vers sa position de repos, cet effort étant d'autant plus important que la partie mobile occupe une position avancée selon la direction prédéterminée, pour que le maintien par l'utilisateur du la palette en position active nécessite un effort d'autant plus important que la partie mobile occupe une position avancée.

Selon une autre caractéristique de l'invention, la chaîne de transmission de mouvement comprend un câble de retour d'effort ayant une première extrémité reliée à la palette et une seconde extrémité reliée au ressort de retour d'effort, le ressort de retour d'effort étant relié à la partie mobile de l'actionneur.

Selon une autre caractéristique de l'invention, la chaîne de transmission de mouvement comprend un câble de retour d'effort ayant une première extrémité reliée à la partie mobile de l'actionneur et une seconde extrémité reliée au ressort de retour d'effort, ce ressort de retour d'effort étant relié à la palette.

Selon une autre caractéristique de l'invention, le ressort de retour d'effort est relié à la palette par l'intermédiaire d'un second câble de retour d'effort.

L'invention sera maintenant décrite plus en détail, et en référence aux dessins annexés qui en illustrent des modes de réalisation à titre d'exemple non limitatif.
- la figure 1 est une représentation schématique d'un frein à main de l'état de la technique ;
- la figure 2 montre un premier mode de réalisation du frein selon l'invention lorsque la palette est en position de desserrage ;
- la figure 3 montre le premier mode de réalisation de l'invention lorsque la palette est en position de repos ;
- la figure 4 montre le premier mode de réalisation de l'invention lorsque la palette est en position de serrage ;
- la figure 5 montre un circuit électrique pour frein secondaire électrique ;
- la figure 6 est un diagramme illustrant le fonctionnement du frein secondaire selon l'invention ;
- la figure 7 montre un second mode de réalisation de l'invention ;
- la figure 8 montre un troisième mode de réalisation de l'invention ;
- la figure 9 est une première vue détaillée de l'actionneur du troisième mode de réalisation de l'invention ;
- la figure 10 est une seconde vue détaillée de l'actionneur du troisième mode de réalisation de l'invention ;
- la figure 11 montre un quatrième mode de réalisation de l'invention ;
- la figure 12 montre un détail du quatrième mode de réalisation de l'invention ;
- la figure 13 montre une variante du quatrième mode de réalisation de l'invention ;
- la figure 14 montre un cinquième mode de réalisation de l'invention lorsque la palette est en position de serrage ;
- la figure 15 montre le cinquième mode de réalisation de l'invention lorsque la palette est en position de repos ;
- la figure 16 montre le cinquième mode de réalisation de l'invention lorsque la palette est en position de desserrage ;
- la figure 17 montre une variante du quatrième mode de réalisation ;
- la figure 18 et un premier diagramme montrant le fonctionnement du frein selon le cinquième mode de réalisation de l'invention ;
- la figure 19 et un second diagramme montrant le fonctionnement du frein selon le cinquième mode de réalisation de l'invention.

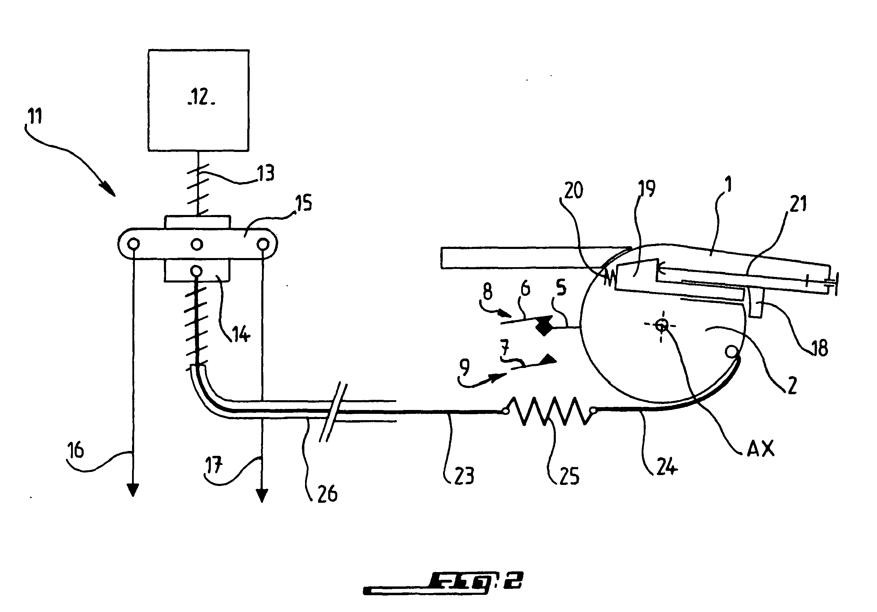

Le frein secondaire électrique qui est représenté schématiquement sur la figure 2 dans un état desserré comprend une palette 1 prolongeant un accoudoir, cette palette étant solidaire d'une poulie 2, l'ensemble formé par la palette et la poulie étant apte à pivoter autour d'un axe AX.

Ce frein électrique comprend un contacteur électrique mobile 5 lié en mouvement à la palette 1, et apte à être en appui soit sur un contact fixe dit de desserrage 6, soit un contact fixe dit de serrage 7, selon que la palette 1 est en position de serrage ou en position de desserrage.

Le contacteur mobile 5 et le contact fixe 6 constituent ainsi un interrupteur de desserrage 8 apte à solliciter l'actionneur 11 pour qu'il desserre le frein lorsque la palette 1 est abaissée. De manière analogue le contact fixe 7 constitue avec le contacteur mobile 5 un interrupteur de serrage du frein, repéré par 9 apte à solliciter l'actionneur 11 pour qu'il serre le frein lorsque la palette 1 est tirée vers le haut sur les figures.

Ce frein électrique comprend également un actionneur électrique 11 comprenant une partie mobile qu'il peut déplacer selon une direction de serrage et selon une direction de desserrage. Cet actionneur 11 comprend un boîtier, dans lequel est monté un moteur électrique 12 qui entraîne en rotation une vis sans fin 13 sur laquelle est monté un curseur 14 lié à la vis sans fin par une liaison hélicoïdale.

Lorsque la vis sans fin est entraînée en rotation par le moteur, le curseur 14 se déplace longitudinalement par rapport à cette vis sans fin 13 pour appliquer l'effort de freinage.

Dans le premier mode de réalisation de l'invention, qui est décrit plus bas, c'est le curseur 14 qui constitue la partie mobile de l'actionneur 11. Mais dans les autres modes de réalisation de l'invention, la partie mobile de l'actionneur est formé soit par le boîtier de l'actionneur, soit par une pièce placée en extrémité d'un ressort dit de serrage.

Dans l'exemple des figures 2 à 4, l'effort de freinage est appliqué aux câbles de freins directement par le curseur 14. Le curseur qui constitue ici la partie mobile de l'actionneur 11 est muni d'un palonnier 15 ayant chacune de ses extrémités reliée à un câble de freins 16, 17. Ce palonnier 15 équilibre les efforts appliqués aux deux câbles lorsque le curseur 14 est déplacé par le moteur. Ces deux câbles de freins 16 et 17 correspondent par exemple respectivement aux freins arrières droite et gauche du véhicule.

Le moteur électrique 12 est commandé au moyen des interrupteurs 8 et 9 qui le sollicitent pour tourner dans un sens ou dans l'autre selon que l'un ou l'autre de ces interrupteurs est activé.

Lorsque l'utilisateur pousse la palette 1, comme c'est le cas dans la figure 2, le contacteur mobile 5 vient en appui contre le contact électrique 6, ce qui ferme l'interrupteur 8 pour alimenter le moteur électrique 12 afin qu'il tourne dans un sens correspondant au desserrage du frein, c'est-à-dire dans un sens tendant à éloigner le curseur 14 du moteur 12 sur les figures.

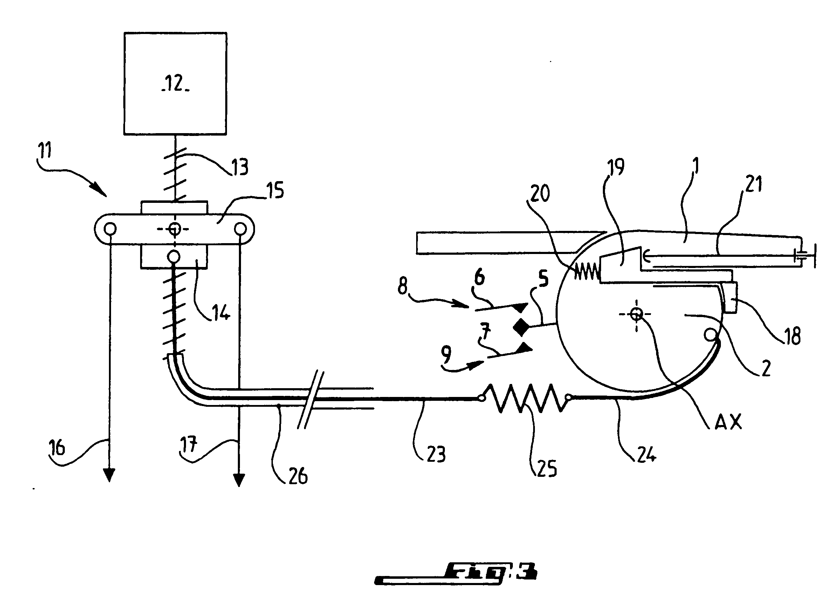

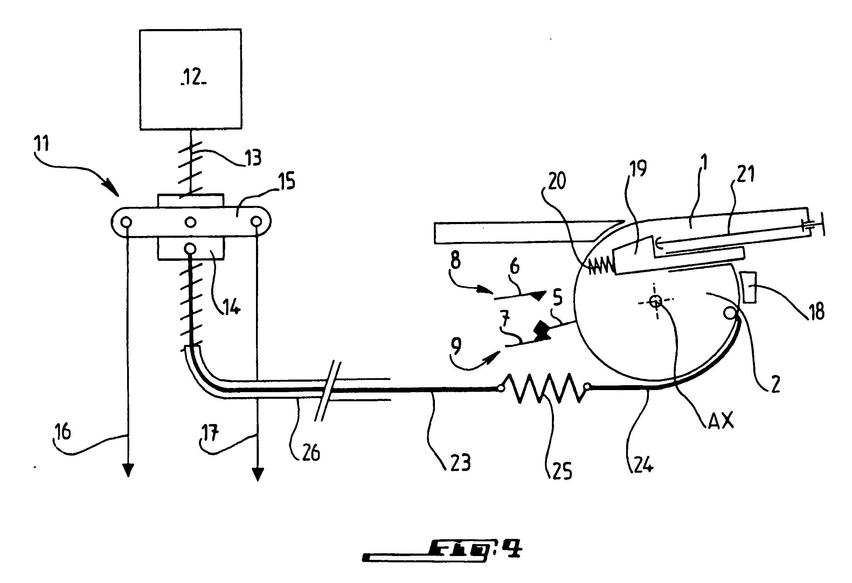

Lorsque l'utilisateur tire la palette 1, comme c'est le cas dans la figure 4, le contacteur mobile 5 vient en appui contre le contact électrique 7 ce qui ferme l'interrupteur 9 pour commander l'alimentation électrique du moteur afin qu'il tourne dans le sens inverse, c'est-à-dire dans un sens tendant à rapprocher le curseur du moteur pour serrer les freins.

Lorsque l'utilisateur n'agit pas sur la palette, celle-ci se place dans une position de repos qui correspond à la position qu'elle occupe sur la figure 3, et dans laquelle l'interrupteur de desserrage 8 et l'interrupteur de serrage 9 sont tous deux ouverts. Dans cette situation, le moteur 12 n'est pas alimenté électriquement, le frein secondaire pouvant alors être soit serré, soit desserré, ce qui dépend de la dernière action qu'a exercé l'utilisateur sur la palette 1.

Comme visible dans les figures, l'ensemble constitué par la palette 1 et la poulie 2 est équipé d'un dispositif de blocage destiné à éviter que l'utilisateur n'agisse sur la palette 1 pour desserrer le frein, par inadvertance.

Ce dispositif de blocage comprend une butée inférieure 18 rigidement solidarisée à une partie fixe du véhicule et placée sensiblement sous la palette 1, un coulisseau 19 apte à se déplacer le long de la palette 1 à l'encontre d'un ressort de rappel 20, et un bouton poussoir 21 qui s'étend le long de la palette. Par défaut, c'est-à-dire lorsque l'utilisateur n'agit pas sur le bouton poussoir 21, une extrémité du coulisseau 19 dépasse légèrement de la poulie 2, le long de la palette 1 pour prendre appui contre la butée inférieure 18 afin d'interdire une rotation de la palette vers le bas.

Lorsque l'utilisateur souhaite desserrer le frein électrique, il enfonce le bouton poussoir 21 pour repousser le coulisseau 19 vers l'arrière à l'encontre du ressort de rappel 20, de sorte que l'extrémité avant du coulisseau ne dépasse plus de la poulie, pour autoriser une rotation de la palette 1 vers le bas.

### Circuit électrique

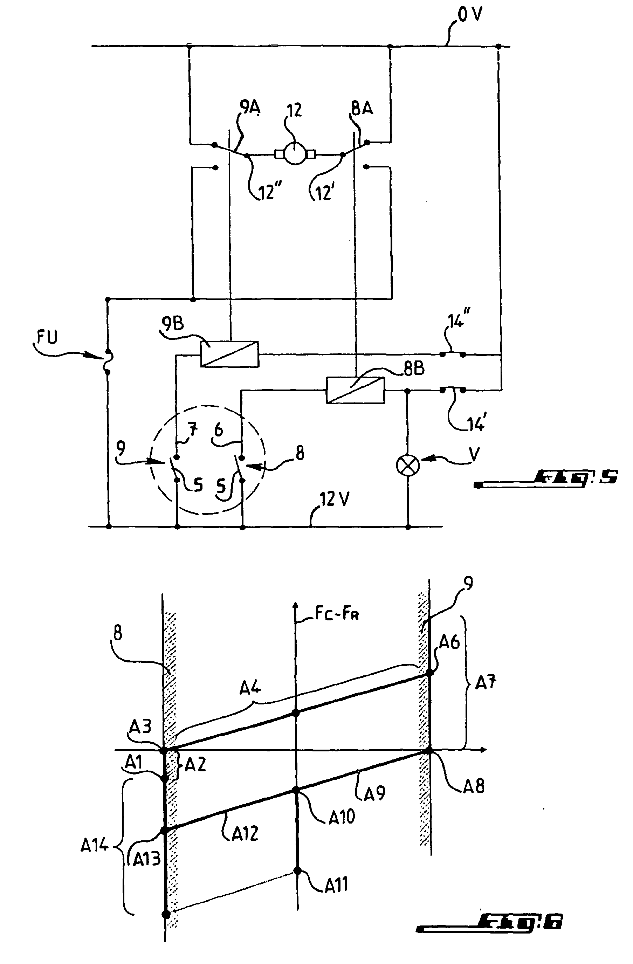

Un exemple de circuit électrique pouvant être mis en oeuvre pour piloter l'actionneur 11 est donné sur la figure 5. Ce circuit est situé entre une masse 0V et une alimentation positive référencée par 12V sur la figure. Dans ce circuit, le moteur électrique 12 est représenté avec deux bornes 12' et 12'' qui sont reliées respectivement à deux interrupteurs 8A et 9A.

Ces deux interrupteurs 8A et 9A sont actionnés respectivement par les interrupteurs de desserrage et de serrage 8 et 9 mentionnés plus haut, par l'intermédiaire, respectivement de deux relais 8B et 9B. Par défaut, c'est-à-dire lorsque le contacteur mobile 5 n'est en contact ni avec le contact 6 ni avec le contact 7, les interrupteurs 8A et 9A sont tous deux reliés à l'alimentation 12V de sorte que le moteur 12 n'est pas alimenté.

Lorsque le contacteur mobile 5 est en appui contre le contact 6 c'est-à-dire lorsque l'interrupteur 8 est fermé, le relais 8B actionne l'interrupteur 8A pour qu'il se mette en contact avec la masse 0V, de sorte que les deux bornes 12' et 12'' du moteur sont alimentées respectivement par la masse 0V et par l'alimentation 12V, ce qui fait tourner le moteur dans un premier sens de rotation.

De manière analogue, lorsque l'interrupteur 9 est fermé, le relais 9B actionne l'interrupteur 9A, et les bornes du moteur sont alimentées de façon inverse, de sorte que le moteur 12 tourne dans un sens opposé au sens ci-dessus.

Ce circuit électrique comprend aussi un fusible FU placé entre les interrupteurs 8A et 9A et la masse 0V, ce fusible étant destiné à intervenir par exemple en cas de court-circuit dans le moteur 12.

Le circuit comprend encore deux interrupteurs dits de fin de course 14' et 14'' qui sont actionnés mécaniquement par le curseur 14 pour s'ouvrir lorsque celui-ci atteint sa course maximale quand il se rapproche du moteur 12 ou sa course maximale quand il s'éloigne de ce moteur. Ces interrupteurs de fin de course qui sont reliés respectivement aux relais 8B et 9B et s'ouvrent lorsque la fin de course est atteinte afin de couper l'alimentation du moteur 12 pour éviter qu'il ne se détériore.

Le circuit de la figure 5 est également équipé d'un voyant repéré par V, qui est relié à l'interrupteur de fin de course de desserrage 14' de manière à s'illuminer lorsque cet interrupteur est fermé, c'est-à-dire lorsque les freins ne sont pas totalement desserrés.

### Dispositif à retour d'effort

L'idée à la base de l'invention est que l'effort appliqué aux câbles de freins est directement contrôlé par l'utilisateur. Ceci est réalisé au moyen d'une commande qui inclut un dispositif à retour d'effort, c'est-à-dire un dispositif retransmettant dans la palette 1 un effort proportionnel à l'effort qui est effectivement exercé par l'actionneur 11 sur les freins.

Avec une telle commande, l'effort de serrage généré par l'actionneur sur les câbles de freins est proportionnel à l'effort que l'utilisateur applique à la palette 1. La sûreté de fonctionnement, en particulier dans les situations critiques est ainsi nettement améliorée puisque c'est l'utilisateur qui dose directement l'effort à appliquer en fonction de la situation.

Un avantage supplémentaire qui procure l'invention réside dans le fait que la commande étant sensible au retour d'effort, son encombrement peut rester très faible.

Ce dispositif à retour d'effort peut être réalisée de différentes manières, par exemple l'utilisation d'un actionneur électrique secondaire non représenté, et relié à l'actionneur principal 11, cet actionneur secondaire agissant sur la palette 1 pour lui appliquer un effort proportionnel à celui qu'applique l'actionneur principal n'est pas exclue.

Mais avantageusement, ce dispositif à retour d'effort est réalisé plus simplement au moyen d'organes mécaniques constituant une chaîne de transmission de mouvement qui relie l'actionneur 11 à la palette 1 par l'intermédiaire d'un ressort de retour d'effort.

Les modes de réalisation décrits ci-après, incluent un ressort de retour d'effort du type classique, c'est-à-dire un ressort hélicoïdal. Mais l'invention peut aussi bien être mise en oeuvre en utilisant à la place de ce ressort hélicoïdal un organe élastique à base de mousse offrant par exemple une élasticité non linéaire.

Ainsi, dans la suite, l'on entend par ressort de retour d'effort un dispositif élastique au sens général, pouvant par exemple être schématisé sous la forme d'un ressort associé en parallèle à un amortissement fluide.

Cette chaîne de transmission peut être réalisée avec une tringlerie pouvant inclure des cames pivotantes, ou bien avec un ou plusieurs câbles et gaines, incluant le ressort à retour d'effort, comme dans les modes de réalisation de l'invention qui sont présentés dans la suite de la présente description.

### Premier mode de réalisation

Dans le premier mode de réalisation de l'invention qui correspond aux figures 2 à 4, la chaîne de transmission de mouvement comprend principalement deux câbles de retour d'effort 23 et 24 reliés l'un à l'autre par le ressort de retour d'effort 25. Les deux extrémités de l'assemblage formé par les deux câbles sont reliées respectivement au curseur 14 et à la poulie 2.

Le premier câble de retour d'effort 23, qui a une extrémité solidaire du curseur 14, est engagé dans une gaine 26 ayant par exemple ses extrémités solidaires de parties fixes du véhicule. La gaine 26 est agencée de telle manière que le curseur 14 s'éloigne de l'extrémité de cette gaine lorsque ce curseur 14 se rapproche du moteur 12.

Ce premier câble de retour d'effort 23 sort de l'autre extrémité de cette gaine 26 à proximité de la poulie 2 pour être relié à une extrémité du ressort de retour d'effort 25, l'autre extrémité de ce ressort est reliée au second câble de retour d'effort 24.

Le second câble de retour d'effort 24 a une première extrémité rigidement fixée au ressort 25 et une seconde extrémité qui est fixée en périphérie de la poulie 2.

Lorsque l'utilisateur tire sur la palette 1 pour serrer le frein, comme dans le cas de la figure 4, le curseur 14 s'éloigne du moteur 12, ce qui a pour effet de solliciter le ressort de retour d'effort 25 en traction, d'une valeur d'autant plus élevée que le curseur 14 est déplacé sur une distance importante le long de la vis sans fin 13.

Ainsi, ce ressort de retour d'effort 25 applique à la palette 1 un effort tendant à la ramener vers le bas, cet effort étant d'autant plus important que le curseur 14 est proche du moteur 12, c'est-à-dire d'autant plus important que le frein est serré. D'autre part, le ressort de retour d'effort 25 est conformé pour générer une tension résiduelle dans le câble 23 de manière à maintenir la palette 1 en appui contre la butée inférieure 18 lorsque cette palette est en position de repos.

La chaîne de transmission de mouvement peut aussi être réalisée avec un câble de retour d'effort 23 ayant une extrémité reliée à la partie mobile de l'actionneur 11 et une extrémité reliée à la poulie 2. Dans ce cas, le ressort de retour d'effort 25 est positionné en extrémité de la gaine entourant ce câble de retour d'effort. La gaine a alors une première extrémité en appui contre une partie fixe du véhicule, une seconde extrémité en appui contre le ressort qui a lui-même son autre extrémité en appui contre une autre partie fixe du véhicule. Ainsi, le ressort de retour d'effort est comprimé entre la seconde extrémité de gaine et la partie fixe du véhicule.

### Diagramme de fonctionnement

La figure 5 est un diagramme montrant la relation entre les efforts mis en jeu et le déplacement correspondant de la palette 1. Dans ce diagramme, l'axe des abscisses est représentatif de la position angulaire de la palette 1, et l'axe des ordonnées est représentatif de la différence entre l'effort FC appliqué par l'utilisateur et l'effort FR que fournit le ressort de retour d'effort 25.

Les deux zones verticales repérées par 8 et 9 correspondent aux positions dans lesquelles le contacteur mobile 5 est en appui respectivement contre le contact 6 et contre le contact 7. Elles correspondent également à des positions dans lesquelles la palette 1 est en butée contre une butée mécanique supérieure et contre une butée mécanique inférieure non représentées sur les figures.

Ce diagramme va maintenant être commenté en référence aux différents points ou zones repérés par A1 à A14 qui en sont caractéristiques, en partant du point A1 correspondant à un état desserré du frein tel que celui de la figure 2, pour serrer ce frein, puis pour le desserrer à nouveau.
A1. La palette 1 est en position desserrée, c'est-à-dire que le coulisseau 19 est rétracté de sorte qu'elle occupe une position basse telle que celle de la figure 2, le frein secondaire étant totalement desserré.
A2. L'utilisateur applique un effort vers le haut sur la palette 1, mais cette palette ne bouge pas tant que l'effort appliqué est inférieur à l'effort du ressort de retour d'effort 25.
A3. L'effort de l'utilisateur sur la palette 1 est égal à celui du ressort de retour d'effort 25, de sorte que s'il augmente l'effort qu'il applique, la palette 1 commence à monter.
A4. L'utilisateur accroît son effort, de sorte que la palette 1 monte, si bien que le ressort de retour d'effort 25 s'allonge, en conséquence de quoi l'effort qu'applique le ressort de retour d'effort 25 à la palette 1 tendant à la tirer vers le bas augmente.
A5. A ce point, le coulisseau 19 passe la butée inférieure 18 et sort sous l'effet du ressort de rappel 20, ce qui correspond sensiblement à la position de la figure 3.
A6. A ce point, la palette atteint une butée supérieure non représentée, ce qui coïncide avec la fermeture de l'interrupteur de serrage 9 et correspond à la position de la figure 4. L'actionneur 11 est donc commandé pour commencer à serrer le frein. Dans cette situation, le mouvement du curseur 14 fait augmenter la longueur du ressort de retour d'effort 25, de sorte que l'effort qu'il applique à la palette 1 pour la ramener vers le bas augmente encore.
A7. Cette partie correspond à la situation dans laquelle l'actionneur 11 continue de serrer le frein secondaire. Pour rester dans cette zone où la palette 1 est en appui contre la butée supérieure non représentée, l'utilisateur doit fournir un effort de plus en plus important de manière à compenser l'effort croissant qu'applique le ressort de retour d'effort 25.
A8. A ce point, l'effort de l'utilisateur est plus faible que celui du ressort de retour d'effort 25. Le passage de ce point signifie que la volonté de l'utilisateur est d'arrêter de serrer le frein secondaire. La palette 1 va commencer à descendre, quitter sa position de serrage et l'interrupteur de serrage 9 va s'ouvrir.
A9. Soit l'utilisateur diminue encore l'effort qu'il applique à la palette 1, soit il la lâche complètement. Elle continue donc sa descente sous l'effet du ressort de retour d'effort 25.
A10. Ce point constitue un aiguillage selon que l'utilisateur actionne ou non le bouton poussoir 21 d'escamotage du coulisseau 19 ce qui correspond à nouveau à la position de la figure 3.
A11. L'utilisateur n'a pas actionné le bouton poussoir 21 et a complètement lâché la palette 1. Dans ce cas, la palette est en position de repos, le frein secondaire étant serré.
A12. L'utilisateur a enfoncé le bouton poussoir 21, de sorte que la palette peut continuer sa descente vers la butée inférieure sous l'effet du ressort 25.
A13. La palette 1 atteint la butée inférieure 18, de sorte que l'interrupteur de desserrage 8 se ferme, ce qui correspond à la position de desserrage du frein de la figure 2.
A14. Zone dans laquelle l'actionneur 11 desserre jusqu'à se faire stopper par son contact de fin de course de desserrage 14', ce qui ramène au point A1.

### Deuxième mode de réalisation

Dans le premier mode de réalisation qui a été décrit plus haut, la partie mobile de l'actionneur 11 est constituée par le curseur 14, et la partie fixe par le moteur 12. L'effort de retour est proportionnel à la position du curseur 14 le long de la vis sans fin 13. Mais cette position peut varier pour un même effort de serrage par exemple du fait de l'usure des garnitures de frein.

Dans le second mode de réalisation, la mise en oeuvre d'un ressort de serrage permet de s'affranchir de cette influence de l'usure éventuelle des garnitures de freins.

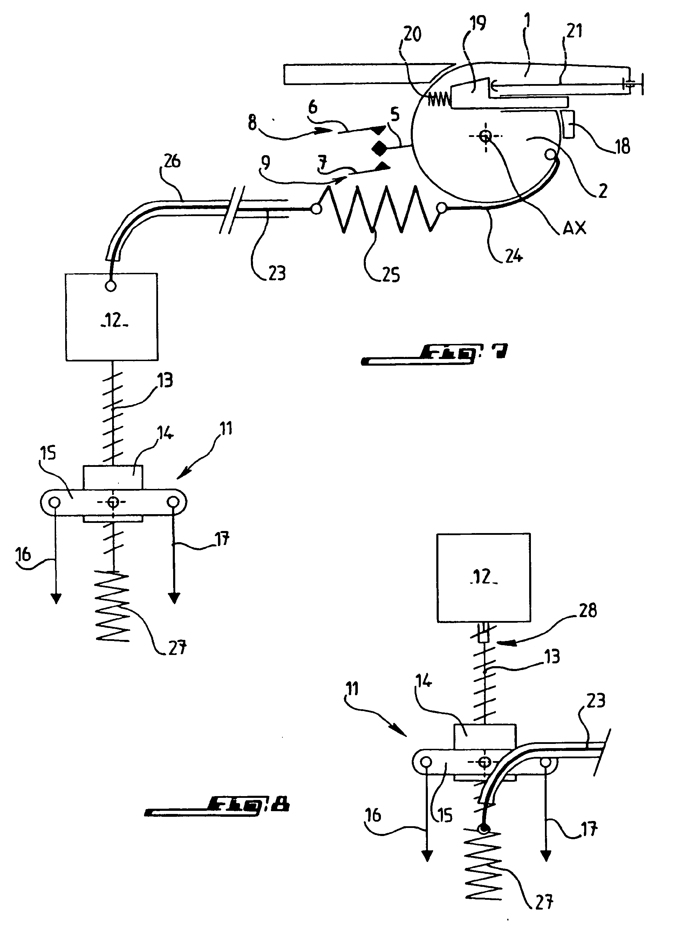

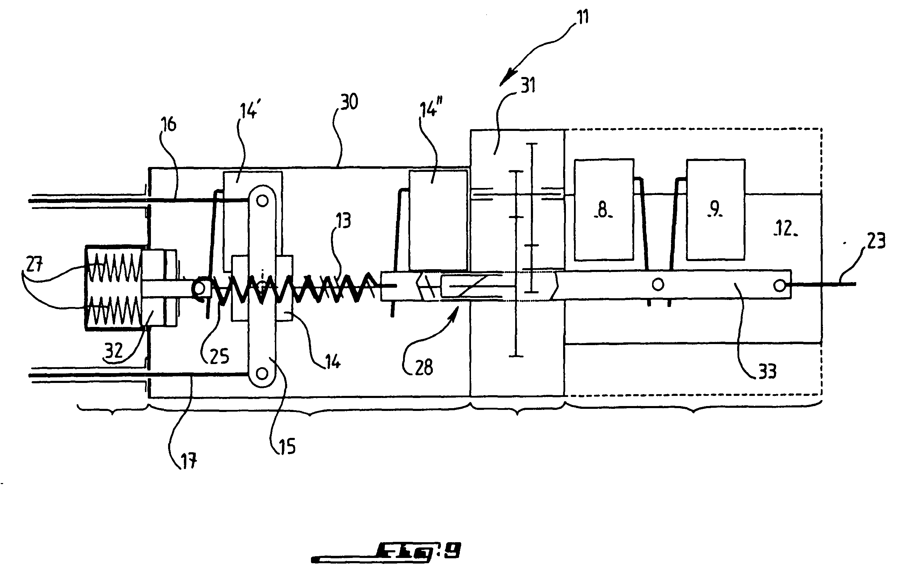

Dans ce second mode de réalisation qui est représenté schématiquement sur la figure 7, le montage de l'actionneur 11 diffère légèrement, celui-ci étant monté en appui contre une partie fixe du véhicule par l'intermédiaire d'un ressort de serrage 27.

Lorsque l'actionneur 11 est sollicité pour serrer le frein, c'est principalement l'ensemble formé par le moteur 12 et la vis sans fin 13 qui se déplace en comprimant le ressort de serrage 27 pour exercer sur les câbles de freins 16 et 17 un effort par l'intermédiaire du curseur 14.

Par conséquent, le retour d'effort est ici proportionnel à l'allongement du ressort de serrage, c'est-à-dire qu'il est proportionnel à l'effort que l'actionneur 11 applique réellement aux câbles de freins 16 et 17.

La mise en oeuvre, selon le second mode de réalisation, du ressort de serrage 27 permet d'obtenir un déplacement plus important du curseur 14 par rapport à la vis sans fin 13 pendant le serrage du frein, de telle sorte que le moteur 12 doit produire l'ensemble de l'effort de serrage sur une plage de rotation plus étendue que dans le premier mode de réalisation.

Comme représenté sur la figure 7, dans ce second mode de réalisation de l'invention, le moteur 12 et la vis sans fin 13 constituent la partie mobile de l'actionneur 11. Le câble de retour d'effort 23 a alors son extrémité rigidement solidaire du moteur 12, en étant agencé de telle manière qu'il tend à allonger le ressort de retour d'effort 25 lors du freinage, c'est-à-dire lorsque le moteur 12 se rapproche du curseur 14.

L'actionneur 11 peut par exemple comprendre un boîtier mobile qui est en appui contre le ressort de serrage 27 au niveau de l'extrémité de la vis sans fin 13 qui est opposée au moteur 12. Différents autres montages sont évidemment possibles pour atteindre le même résultat.

Un autre avantage de cette solution réside dans le fait que le conducteur peut directement détecter une rupture du câble de frein 16 et 17, par absence de retour d'effort dans la palette 1.

### Troisième mode de réalisation

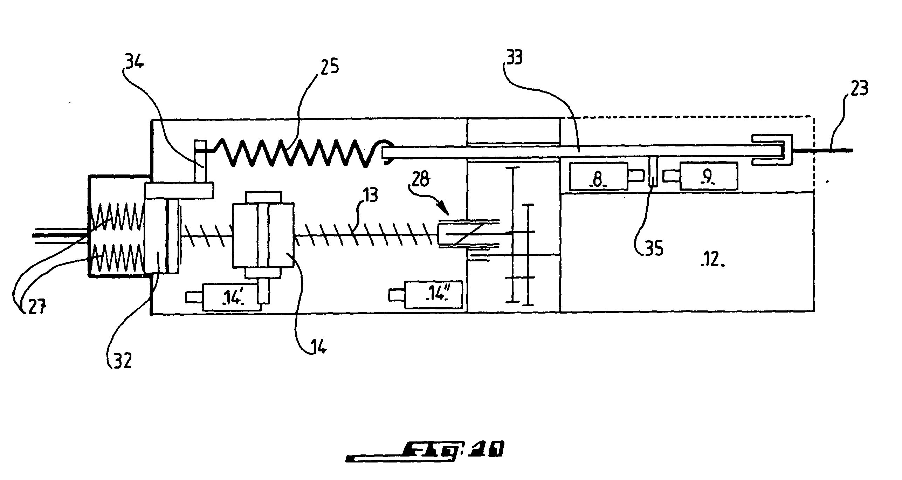

Dans un troisième mode de réalisation, la partie mobile de l'actionneur 11 est formée par une butée à bille située à l'une des extrémités du ressort de serrage 27. Dans ce mode de réalisation qui est représenté sur la figure 8, le corps du moteur 12 est monté fixe par rapport au véhicule, mais le moteur 12 a son arbre de sortie qui est lié à la vis sans fin 13 par une liaison glissière 28 grâce à laquelle la vis sans fin est solidaire en rotation de cet arbre de sortie tout en pouvant se déplacer longitudinalement par rapport à celui-ci.

L'autre extrémité de la vis sans fin 13 est en appui contre le ressort de serrage 27 par l'intermédiaire d'une butée à bille non représentée, de telle sorte que la vis sans fin 13 peut tourner par rapport au ressort de serrage tout en étant en appui contre celui-ci.

Lorsque l'actionneur 11 est sollicité pour serrer le frein secondaire, la vis sans fin 13 est entraînée en rotation et avance par rapport au curseur 14, grâce à la liaison glissière 28, de telle sorte qu'elle comprime le ressort de serrage 27 pour exercer un effort de freinage sur les câbles de freins 16 et 17.

Dans ce troisième mode de réalisation, le câble de retour d'effort 23 a une extrémité rigidement fixée à une partie non rotative de la butée à bille, dans une direction telle que la compression du ressort de serrage 27 tire sur ce câble de retour d'effort 23, tendant à allonger le ressort de retour d'effort 25.

### Architecture d'un actionneur selon l'invention

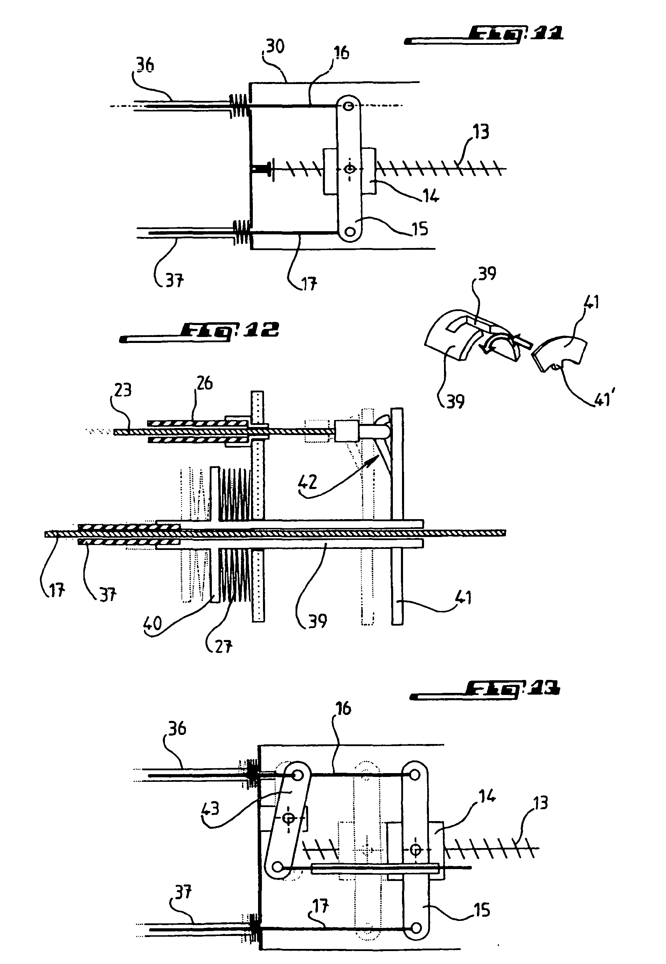

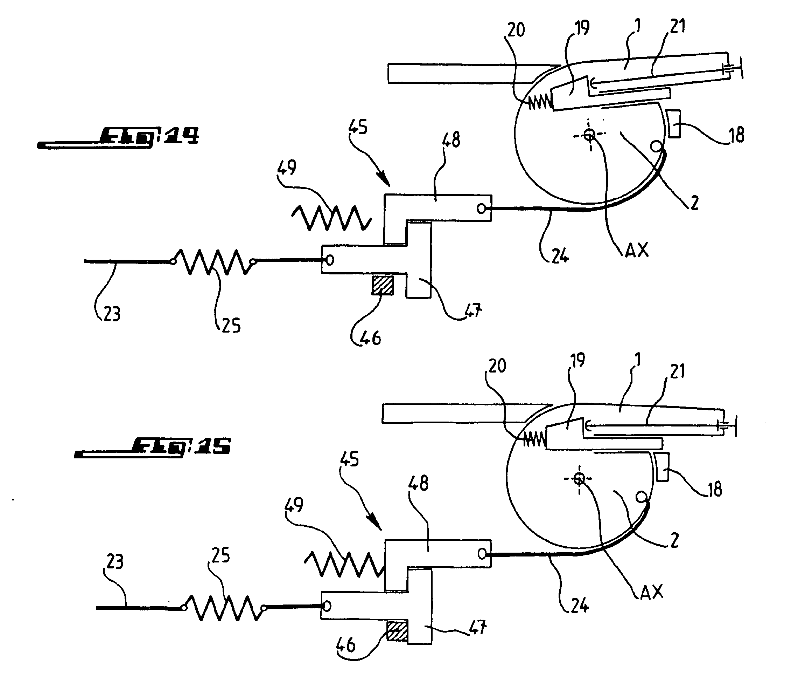

Les figures 9 et 10 montrent de façon plus détaillée une architecture d'un actionneur électrique 11 selon l'invention, et qui comprend un boîtier 30 dans lequel sont regroupés la majorité des organes de la commande de frein secondaire selon l'invention.

Ce boîtier comprend le moteur 12 qui est associé à un réducteur mécanique 31 comprenant un arbre de sortie relié à la vis sans fin 13 par la liaison glissière 28. La vis sans fin 13 a son autre extrémité en appui sur un ressort de serrage 27 qui est ici formé par plusieurs rondelles "Belleville", par l'intermédiaire de la butée à bille qui est repérée par 32, ce ressort de serrage est placé du côté intérieur du boîtier 30. Dans cet agencement, l'ensemble du boîtier 30 est monté fixe par rapport au véhicule, et la partie mobile de l'actionneur est constituée par la butée à bille 32.

Le ressort de retour d'effort 25 est monté à l'intérieur du boîtier 30 en ayant une extrémité fixée à une attache 34 qui est solidaire de la partie de la butée à bille 32 en appui contre le ressort de serrage 27. L'autre extrémité du ressort de retour d'effort 25 est fixée à une extrémité d'une tige de retour d'effort 33 qui est apte à se déplacer longitudinalement par rapport au boîtier. L'autre extrémité de la tige de retour d'effort est fixée à l'une des extrémités du câble de retour d'effort 23 qui traverse la paroi du boîtier 30, et qui rejoint la poulie 2.

Dans cet exemple, la chaîne de transmission de mouvement est donc formée principalement par le ressort de retour d'effort 25, par la tige de retour d'effort 33 qui sont situés à l'intérieur du boîtier 30, et par le câble de retour d'effort 23 qui sort de ce boîtier 30 pour rejoindre la partie 2.

Comme représenté sur les figures 9 et 10, le boîtier 30 comprend également l'interrupteur de fin de course de desserrage 14' et l'interrupteur de fin de course de serrage 14'' qui sont tous deux actionnés par le curseur 14.

Mais les interrupteurs 8 et 9, destinés à commander le desserrage et le serrage sont également situés à l'intérieur du boîtier 30, en étant actionnés par l'intermédiaire d'un ergot 35 qui est solidaire de la tige de retour d'effort 33.

Lorsque l'utilisateur tire sur la palette 1 pour commander le serrage du frein, le câble de retour d'effort 23 tire la tige de retour d'effort 33 vers la droite sur ces figures, ce qui a pour effet d'activer l'interrupteur 9 pour déclencher le serrage du frein. De manière analogue, lorsque l'utilisateur enfonce la palette 1, la tige de retour d'effort 33 est déplacée vers la gauche sur ces figures, de sorte que l'ergot 35 active alors l'interrupteur 8 qui commande le desserrage du frein.

### Quatrième mode de réalisation

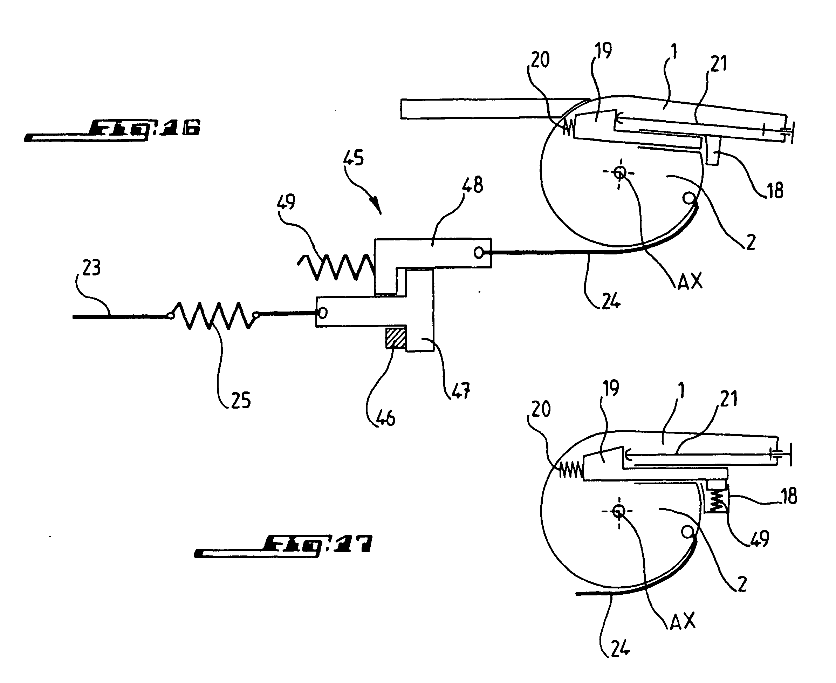

Dans le quatrième mode de réalisation qui est représenté sur les figures 11 à 13, l'actionneur 11 comprend également un boîtier 30 qui est fixe par rapport au véhicule automobile, mais les ressorts de serrage 27 sont placés en extrémités des gaines 36 et 37 dans lesquelles sont engagés les câbles de freins 16 et 17.

Cet agencement permet de simplifier l'architecture de l'actionneur en évitant notamment d'avoir à prévoir la vis sans fin 13 mobile longitudinalement dans le boîtier et munie d'une butée à bille.

Comme visible dans la figure 11, les deux câbles de freins 16 et 17 traversent la paroi du boîtier 30 pour être fixés au palonnier 15, et les extrémités des gaines correspondantes 36 et 37 sont prolongées par deux ressorts de serrage 27 qui viennent en appui contre la paroi du boîtier 30.

Lorsque le serrage du frein est commandé, le curseur 14 se rapproche du moteur 12, pour exercer une traction sur les câbles 16 et 17. Dans cette situation, les ressorts de serrage 27 se compriment pour permettre le coulissement des câbles de freins 16 et 17 dans leurs gaines respectives.

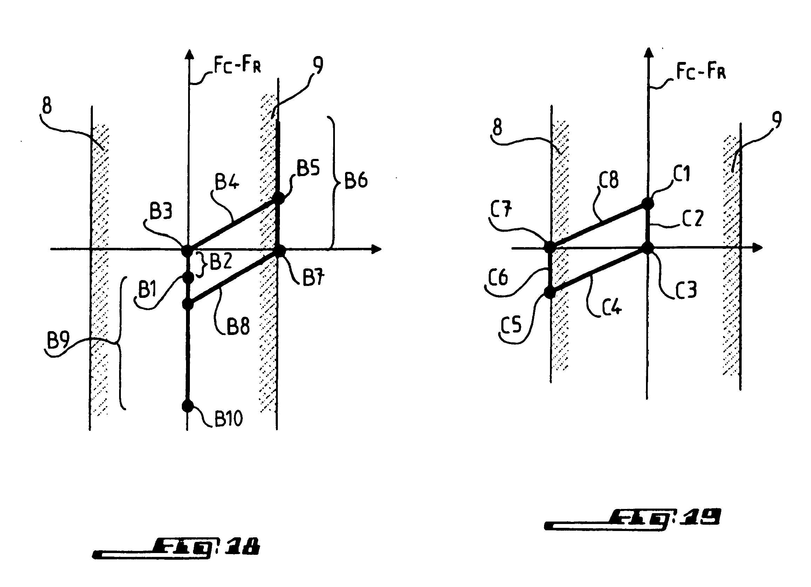

Dans ce mode de réalisation, la partie mobile de l'actionneur 11 est formée par une butée mobile 39 placée entre l'extrémité de l'une des gaines 36, 37, et le ressort de serrage 27 correspondant, ce qui est représenté sur la figure 12.

Selon ce montage, la butée mobile 39 se déplace par rapport à la paroi du boîtier 30 lorsque le ressort de serrage 27 est comprimé, c'est-à-dire lors du serrage du frein. Plus particulièrement, cette butée mobile 39 qui a une forme tubulaire entoure le câble de frein 16 et traverse la paroi du boîtier 30 par rapport auquel elle peut coulisser. Elle est entourée par le ressort de serrage 27 qui est comprimé entre une surface plane 40 de cette butée, perpendiculaire au tube qu'elle constitue, et la paroi du boîtier 30.

L'extrémité tubulaire de cette butée mobile 39, qui est située à l'intérieur du boîtier 30 est rigidement fixée à une plaque 41. La fixation à cette plaque est par exemple réalisée par encliquetage rotatif, comme visible sur la vue en détail de la figure 12.

Plus particulièrement, la butée mobile 39 comprend à son extrémité une rigole 39' comprenant une portion longitudinale et une portion transversale. La plaque 41 comprend un perçage destiné à recevoir cette extrémité de butée mobile, ce perçage étant muni d'une dent 41' s'étendant radialement vers l'intérieur, cette dent ayant des dimensions lui permettant de s'engager dans la rigole 39'.

Ainsi, la solidarisation de la butée mobile 39 dans la plaque 41 consiste à engager cette butée dans le perçage de la plaque, la dent 41' s'engageant le long de la rigole 39', puis à faire pivoter la butée 39 d'un quart de tour pour que la dent s'engage dans la portion transversale de la rigole, de manière à interdire un coulissement de la butée par rapport à la plaque.

Le câble de retour d'effort 23 est fixé à cette plaque 41 par une attache 42 et traverse également la paroi du boîtier 30 pour rejoindre la palette 1. Ainsi, sur compression du ressort de serrage 27, la distance entre la plaque 41 et la paroi du boîtier 30 augmente, ce qui permet d'allonger le ressort de retour d'effort 25 pour qu'il augmente l'intensité de l'effort qu'il applique à la palette 1.

Dans l'exemple de la figure 13, le câble de retour d'effort 23 et le câble de freinage traversent le boîtier 30 sur la même face, mais le câble de retour d'effort 23 peut également être dirigé dans une direction opposée à celle du câble de freinage. Un tel agencement est représenté sur la figure 13 dans laquelle l'attache 42 est reliée à une extrémité d'un second palonnier 43 monté à l'intérieur du boîtier. Ce second palonnier 43 est apte à pivoter par rapport à son centre, et le câble de retour d'effort 23 est fixé à l'autre extrémité de ce palonnier pour obtenir une inversion de mouvement permettant de faire sortir le câble de retour d'effort 23 vers une extrémité du boîtier 30 opposée à l'extrémité recevant les câbles de freinage.

### Cinquième mode de réalisation

La chaîne de transmission de mouvement constituant le dispositif à retour d'effort qui a été décrit plus haut peut encore être améliorée grâce à une liaison à butées coulissantes 45 représentée schématiquement sur les figures 14 à 16 qui montrent le frein respectivement lorsque la palette 1 est en position de serrage, de repos, et de desserrage.

Dans cet agencement, la chaîne de transmission de mouvement comprend un câble de retour d'effort 23 ayant une première extrémité reliée à la partie mobile de l'actionneur 11 et une seconde extrémité reliée au ressort de retour d'effort 25. Le ressort de retour d'effort 25 est relié à la palette 1 par l'intermédiaire d'une liaison à butées coulissantes 45 et d'un second câble de retour d'effort 24.

Plus particulièrement, la liaison à butées coulissantes 45 comprend une première butée coulissante 47 fixée en extrémité du ressort de retour d'effort 25 et venant en appui contre une butée fixe 46 lorsque la palette 1 est en position de repos ou en position de desserrage.

Ainsi, aucun effort n'est exercé par le ressort de retour d'effort 25 sur la palette 1 lorsque celle-ci est en position de repos, comme dans la figure 15, puisque dans ce cas le ressort de retour d'effort 25 applique un effort sur la butée fixe 46. Par conséquent, lorsque l'utilisateur doit débloquer la palette 1 au moyen du bouton poussoir 21 pour desserrer le frein, l'effort qu'il doit appliquer à ce bouton poussoir 21 est plus faible que dans les modes de réalisation précédents.

Dans cet agencement, une seconde butée coulissante 48 est fixée en extrémité du second câble de retour d'effort pour tirer la première butée coulissante 47 lorsque la palette 1 est déplacée vers la position de serrage du frein par l'utilisateur. Cette situation correspond à la figure 14 dans laquelle le ressort de retour d'effort 25 exerce alors sur la palette 1 un effort tendant à la ramener vers sa position de repos.

Avantageusement, un ressort de ressenti de desserrage 49 est placé entre la seconde butée coulissante 48 et une partie fixe du véhicule. Ce ressort de ressenti de desserrage 49 exerce ainsi sur la palette 1 un effort tendant à la ramener vers sa position de repos lorsqu'elle est déplacée vers sa position de desserrage, comme dans la figure 17.

Ainsi, lors du serrage du frein, c'est le ressort 25 qui fournit le retour d'effort à la palette 1, et lors du desserrage du frein, cette fonction est assurée par le ressort 49 qui pourra être dimensionné différemment. Ainsi, le retour d'effort varie lors du serrage du frein, et il est sensiblement constant lors du desserrage.

D'autre part, le ressort de ressenti 49 applique à la palette 1 un effort qui tend à la ramener vers la position de repos lorsqu'elle est en position de desserrage. Par conséquent, dès que l'utilisateur lâche la palette 1, celle-ci revient spontanément en position de repos.

Le ressort de ressenti de desserrage peut également être placé dans la butée inférieure 18, comme dans l'exemple de la figure 17.

### Diagramme de fonctionnement

Dans ce cinquième mode de réalisation de l'invention, le fonctionnement du frein est discontinu entre les phases de serrage et les phases de desserrage, de sorte que le fonctionnement du frein est représenté par deux diagrammes distincts, sur les figures 18 et 19.

Le diagramme de la figure 18 montre le fonctionnement du frein lorsque l'utilisateur le serre, ce qui correspond aux figures 14 et 15.
B1. La palette est en position de repos comme dans la figure 15, le frein secondaire étant totalement desserré.
B2. L'utilisateur applique un effort vers le haut sur la palette.
B3. A ce point l'effort de l'utilisateur est égal à celui du ressort de retour d'effort 25.
B4. L'utilisateur accroît son effort de sorte que la palette 1 monte vers sa position de serrage.
B5. La palette atteint la position de serrage, pour commander le serrage du frein par l'actionneur 11, comme dans la figure 14.
B6. L'actionneur continue de serrer le frein, et l'utilisateur doit fournir un effort de plus en plus important pour maintenir la palette en position de serrage.
B7. L'effort du conducteur est plus faible que celui du ressort de retour d'effort 25. Le passage par ce point est significatif de la volonté du conducteur d'arrêter le serrage du frein.
B8. La palette continue de descendre vers sa position de repos, de sorte que l'actionneur arrête 11 de déplacer sa partie mobile.
B9. Zone dans laquelle est situé le point de fonctionnement, ce qui dépend de l'état de l'actionneur. Au point B1, l'actionneur est totalement desserré, au point B10 il est serré au maximum. Toutes les positions intermédiaires sont évidemment possibles.

Le diagramme de la figure 19 montre le desserrage du frein secondaire selon l'invention, ce qui correspond aux figures 15 et 16.
C1. La palette 1 est dans sa position de repos comme dans la figure 15, le frein secondaire étant serré.
C2. L'utilisateur applique un effort vers le bas pour placer la palette 1 en position de desserrage, la palette ne bouge pas tant que cet effort est inférieur à celui du ressort de ressenti de desserrage.
C3. A ce point, l'effort de l'utilisateur est égal à celui du ressort de ressenti de desserrage 49.
C4. La palette descend vers sa position de desserrage.
C5. La palette atteint la butée inférieure, de sorte que l'interrupteur 8 s'active pour commander le desserrage du frein, ce qui correspond à la figure 16.
C6. Zone dans laquelle l'actionneur 11 desserre le frein, jusqu'à se faire stopper par l'interrupteur de fin de course de desserrage 14'.
C7. A ce point, l'effort de l'utilisateur est inférieur à celui du ressort de ressenti 49. Le passage de ce point indique que l'utilisateur lâche la palette.
C8. La palette remonte vers sa position de repos sous l'effet du ressort de ressenti de desserrage 49.

L'invention qui a été décrite ci-dessus dans le cadre d'un frein secondaire électrique trouve des applications dans d'autres domaines nécessitant de façon générale la mise en oeuvre d'une commande du type à retour d'effort.

Notamment, dans le secteur automobile, elle peut avantageusement s'appliquer notamment au cas d'une commande de lève-vitre électrique.

**Nomenclature**

| | |
|---|---|
| 1 palette | 28 liaison glissière |
| 2 poulie | 30 boîtier |
| 3 câble de serrage de frein | 31 réducteur mécanique |
| | 32 butée à bille |
| 4 dispositif à cliquet | 33 tige de retour d'effort |
| 4A cliquet | 34 attache |
| 4B denture | 35 ergot |
| 4C ressort | 36 gaine de serrage |
| 4D bouton de déblocage | 37 gaine de serrage |
| | 39 butée mobile |
| 5 contacteur électrique mobile | 40 surface plane |
| 6 contact fixe de desserrage | 41 plaque |
| 7 contact fixe de serrage | 42 attache |
| 8 interrupteur de desserrage | 43 second palonnier |
| 8A interrupteur | 45 liaison à butées coulissantes |
| 8B relais | 46 butée fixe |
| 9 interrupteur de serrage | 47 première butée coulissante |
| 9A interrupteur | 48 seconde butée coulissante |
| 9B relais | 49 ressort de ressenti de desserrage |
| 11 actionneur électrique | |
| 12 moteur électrique | 0V masse |
| 12' borne | 12V alimentation |
| 12" borne | |
| 13 vis sans fin | AX axe |
| 14 curseur | FC effort de l'utilisateur |
| 14' fin de course de desserrage | FR effort du ressort |
| 14'' fin de course de serrage | FU fusible |
| | V voyant |
| 15 palonnier | |
| 16 câble de frein | |
| 17 câble de frein | |
| 18 butée inférieure | |
| 19 coulisseau | |
| 20 ressort de rappel | |
| 21 bouton poussoir | |
| 23 câble de retour d'effort | |
| 24 second câble de retour d'effort | |
| 25 ressort de retour d'effort | |
| 26 gaine | |
| 27 ressort de serrage | |

## Revendications

1. Frein secondaire électrique de véhicule automobile, comprenant un actionneur électrique (11) incluant une partie mobile (14, 32, 41) que cet actionneur déplace selon une direction dite de serrage lorsqu'il est sollicité pour serrer le frein, une palette (1) pouvant être déplacée par un utilisateur entre une position de repos et une position de serrage dans laquelle elle sollicite électriquement l'actionneur pour qu'il serre le frein, **caractérisé en ce que** la palette (1) est liée à l'actionneur (11) par un dispositif à retour d'effort, ce dispositif appliquant à la palette (1) un effort tendant à la ramener en position de repos, cet effort étant d'autant plus important que la partie mobile occupe une position avancée dans la direction de serrage.

2. Frein selon la revendication 1, dans lequel le dispositif à retour d'effort est une chaîne de transmission de mouvement incluant un ressort (25) de retour d'effort, cette chaîne de transmission de mouvement ayant une extrémité reliée mécaniquement à la partie mobile (14, 32, 41) de l'actionneur (11), et une autre extrémité reliée mécaniquement à la palette (1).

3. Frein selon la revendication 2, dans lequel la chaîne de transmission de mouvement comprend un câble de retour d'effort (23) ayant une première extrémité reliée à la palette (1) et une seconde extrémité reliée au ressort de retour d'effort (25), le ressort de retour d'effort (25) étant relié à la partie mobile (14, 32, 41) de l'actionneur (11).

4. Frein selon la revendication 2, dans lequel la chaîne de transmission de mouvement comprend un câble de retour d'effort (23) ayant une première extrémité reliée à la partie mobile (14, 32, 41) de l'actionneur (11) et une seconde extrémité reliée au ressort de retour d'effort (25), ce ressort de retour d'effort (25) étant relié à la palette (1).

5. Frein selon la revendication 4, dans lequel le ressort de retour d'effort (25) est relié à la palette (1) par l'intermédiaire d'un second câble de retour d'effort (24).

6. Frein selon la revendication 2, dans lequel la chaîne de transmission de mouvement comprend un câble de retour d'effort (23) ayant une première extrémité reliée à la palette (1) et une seconde extrémité reliée à la partie mobile (14, 32, 41) de l'actionneur (11), ce câble de retour d'effort (23) étant engagé dans une gaine ayant une première extrémité en appui contre une partie fixe du véhicule et une seconde extrémité en appui contre une autre partie fixe du véhicule par l'intermédiaire du ressort de retour d'effort (25).

7. Frein selon l'une des revendications précédentes, dans lequel la partie mobile (14, 32, 41) peut être déplacée par l'actionneur (11) selon une autre direction, dite direction de desserrage lorsque cet actionneur (11) est sollicité pour desserrer le frein, et dans lequel la palette (1) peut être déplacée par l'utilisateur entre la position de repos et une position de desserrage dans laquelle elle sollicite électriquement l'actionneur (11) pour qu'il desserre le frein.

8. Frein selon l'une des revendications précédentes, dans lequel l'actionneur (11) comprend un boîtier (30) dans lequel sont montés un moteur (12) et une vis sans fin (13) liée en rotation à un arbre de ce moteur (12), un curseur (14) lié en mouvement à la vis sans fin (13) par une liaison hélicoïdale, ce curseur (14) étant lié à un câble de serrage (16, 17) du frein.

9. Frein selon la revendication 8, dans lequel le boîtier (30) de l'actionneur (11) est monté fixe par rapport au véhicule, et dans lequel la partie mobile du servomoteur est formée par le curseur (14).

10. Frein selon la revendication 8, dans lequel le boîtier (30) de l'actionneur (11) est monté mobile pour constituer la partie mobile du servomoteur, ce boîtier (30) étant en appui sur une partie fixe du véhicule par l'intermédiaire d'un ressort de serrage (27).

11. Frein selon la revendication 8 dans lequel le boîtier (30) de l'actionneur (11) est monté fixe par rapport au véhicule, dans lequel la vis sans fin (13) a une extrémité liée en mouvement à l'arbre du moteur (12) par une liaison glissière (28), de sorte que cette vis sans fin (13) peut se déplacer longitudinalement par rapport au boîtier (30) tout en étant entraînée en rotation par le moteur (12), cette vis sans fin (13) ayant son autre extrémité solidaire d'une buttée à billes (32) qui est appui sur une partie fixe du véhicule par l'intermédiaire d'un ressort de serrage (27), et dans lequel la partie mobile de l'actionneur est constituée par la butée à bille (32).

12. Frein selon la revendication 8, dans lequel le boîtier (30) de l'actionneur (11) est monté fixe par rapport au véhicule, dans lequel le câble de serrage (16, 17) traverse une paroi du boîtier (30) pour être relié au curseur (14), ce câble de serrage (16, 17) étant engagé dans une gaine de serrage (36, 37) ayant une extrémité en appui contre la paroi du boîtier (30) par l'intermédiaire d'une butée mobile (39) en appui sur le ressort de serrage (27) pour le comprimer contre la paroi, et dans lequel la partie mobile est formée par la butée mobile (39).

13. Frein selon la revendication 12, dans lequel le câble de retour d'effort (23) est relié à la butée mobile (39) par l'intermédiaire d'une plaque (41) qui est solidarisée à la butée mobile (39) par encliquetage.

14. Frein selon la revendication 12, dans lequel la butée mobile (39) est reliée à une extrémité d'un palonnier (15) et dans lequel le câble de retour d'effort (23) est relié à une autre extrémité de ce palonnier (15).

15. Frein selon l'une des revendications précédentes, dans lequel l'actionneur (11) est équipé de deux interrupteurs de fin de course (14', 14'') aptes à couper l'alimentation électrique du moteur (12) lorsque le curseur (14) est en fin de course de serrage ou en fin de course de desserrage.

16. Frein selon la revendication 11, dans lequel le boîtier d'actionneur comprend un interrupteur de serrage (9) et un interrupteur de desserrage (8) actionnés par la palette (1) pour solliciter l'actionneur (11), dans lequel le câble de retour d'effort (23) est relié à la butée à bille (32) par l'intermédiaire d'une tige de retour d'effort (33) et du ressort de retour d'effort (25) qui sont situés à l'intérieur du boîtier (30), cette tige de retour d'effort (33) comprenant un ergot (35) apte à fermer l'interrupteur de serrage ou l'interrupteur de desserrage lorsqu'elle est déplacée longitudinalement dans le boîtier (30) par le câble de retour d'effort (23) lorsque l'utilisateur déplace la palette (1) vers la position de serrage ou vers la position de desserrage.

17. Frein selon l'une des revendications 2 à 16, dans lequel la chaîne de transmission de mouvement comprend un câble de retour d'effort (23) ayant une première extrémité reliée à la partie mobile (14, 32, 41) de l'actionneur (11) et une seconde extrémité reliée au ressort de retour d'effort (25), ce ressort de retour d'effort (25) étant relié à la palette (1) par l'intermédiaire d'une liaison à butées coulissantes (45) et d'un second câble de retour d'effort (24).

18. Frein selon la revendication 17, dans lequel la liaison à butées coulissantes (45) comprend une butée fixe (46), une première butée coulissante (47) fixée au ressort de retour d'effort (25) et venant en appui contre la butée fixe (46) lorsque la palette (1) est en position de repos ou en position de desserrage, une seconde butée coulissante (48) fixée en extrémité du second câble de retour d'effort (24), cette seconde butée coulissante (48) coopérant avec la première butée coulissante (47) pour la tirer lorsque la palette (1) est déplacée vers sa position de serrage.

19. Frein selon la revendication 18, comprenant un ressort de ressenti de desserrage (49) comprimé entre la seconde butée coulissante (48) et une partie fixe du véhicule, de telle sorte que ce ressort de ressenti de desserrage (49) exerçant sur la palette (1) un effort tendant à la ramener vers sa position de repos lorsque celle-ci est déplacée vers sa position de desserrage.

20. Système de commande, comprenant une palette (1) pouvant être déplacée par un utilisateur entre une position de repos et une position active dans laquelle cette palette (1) sollicite électriquement un actionneur (11), un actionneur (11) incluant une partie mobile (14, 32, 41) qu'il déplace selon une direction prédéterminée lorsqu'il est sollicité, **caractérisé en ce que** la palette (1) est liée en mouvement à la partie mobile (14, 32, 41) par une chaîne de transmission de mouvement incluant un ressort de retour d'effort (25) pour exercer sur la palette (1) un effort tendant à la ramener vers sa position de repos, cet effort étant d'autant plus important que la partie mobile (14, 32, 41) occupe une position avancée selon la direction prédéterminée, pour que le maintien par l'utilisateur du la palette (1) en position active nécessite un effort d'autant plus important que la partie mobile (14, 32, 41) occupe une position avancée.

21. Système de commande selon la revendication 20, dans lequel la chaîne de transmission de mouvement comprend un câble de retour d'effort (23) ayant une première extrémité reliée à la palette (1) et une seconde extrémité reliée au ressort de retour d'effort (25), le ressort de retour d'effort (25) étant relié à la partie mobile (14, 32, 41) de l'actionneur (11).

22. Système de commande selon la revendication 20, dans lequel la chaîne de transmission de mouvement comprend un câble de retour d'effort (23) ayant une première extrémité reliée à la partie mobile (14, 32, 41) de l'actionneur (11) et une seconde extrémité reliée au ressort de retour d'effort (25), ce ressort de retour d'effort (25) étant relié à la palette (1).

23. Système de commande selon la revendication 22, dans lequel le ressort de retour d'effort (25) est relié à la palette (1) par l'intermédiaire d'un second câble de retour d'effort (24).

## Claims

1. A secondary electric brake for a motor vehicle, comprising an electric actuator (11) including a mobile portion (14, 32, 41) which this actuator moves along a so-called clamping direction when it is actuated for clamping the brake, a pallet (1) being displaceable by a user between a rest position and a clamping position in which it electrically actuates the actuator so as to clamp the brake, **characterized in that** the pallet (1) is connected to the actuator (11) by a force returning device, this device applying to the pallet (1) a force which tends to bring it back to the rest position, this force being all the more significant as the mobile portion occupies an advanced position in the clamping direction.

2. The brake according to claim 1, wherein the force returning device is a movement transmission chain including a force returning spring (25), this movement transmission chain having an end mechanically connected to the mobile portion (14, 32, 41) of the actuator (11), and another end mechanically connected to the pallet (1).

3. The brake according to claim 2, wherein the movement transmission chain comprises a force returning cable (23) with a first end connected to the pallet (1) and a second end connected to the force returning spring (25), the force returning spring (25) being connected to the mobile portion (14, 32, 41) of the actuator (11).

4. The brake according to claim 2, wherein the movement transmission chain comprises a force returning cable (23) with a first end connected to the mobile portion (14, 32, 41) of the actuator (11) and a second end connected to the force returning spring (25), this force returning spring (25) being connected to the pallet (1).

5. The brake according to claim 4, wherein the force returning spring (25) is connected to the pallet (1) via a second force returning cable (24).

6. The brake according to claim 2, wherein the movement transmission chain comprises a force returning cable (23) with a first end connected to the pallet (1) and a second end connected to the mobile portion (14, 32, 41) of the actuator (11), this force returning cable (23) being engaged in a sheath with a first end pressing against a fixed portion of the vehicle, and a second end pressed against another fixed portion of the vehicle, via the force returning spring (25).

7. The brake according to any of the preceding claims, wherein the mobile portion (14, 32, 41) may be moved by the actuator (11) along another direction, a so-called loosening direction when this actuator (11) is actuated for loosening the brake, and wherein the pallet (1) may be moved by the user between the rest position and a loosening position in which it electrically actuates the actuator (11) so that it loosens the brake.

8. The brake according to any of the preceding claims, wherein the actuator (11) comprises a casing (30) in which are mounted a motor (12) and a worm screw (13) rotationally connected to a shaft of this motor (12), a cursor (14) movably connected to the worm screw (13) by a helicoidal link, this cursor (14) being connected to a cable (16, 17) for clamping the brake.

9. The brake according to claim 8, wherein the casing (30) of the actuator (11) is fixedly mounted relatively to the vehicle, and wherein the mobile portion of the servomotor is formed by the cursor (14).

10. The brake according to claim 8, wherein the casing (30) of the actuator (11) is movably mounted in order to form the mobile portion of the servomotor, this casing (30) resting on a fixed portion of the vehicle via a force returning spring (27).

11. The brake according to claim 8, wherein the casing (30) of the actuator (11) is fixedly mounted relatively to the vehicle, wherein the worm screw (13) has an end movably connected to the shaft of the motor (12) through a slide link (28), so that this worm screw (13) may move longitudinally relative to the casing (30) while being driven into rotation by the motor (12), this worm screw (13) having its other end firmly attached to a thrust ball bearing (32) which bears upon a fixed portion of the vehicle via a clamping spring (27), and wherein the mobile portion of the actuator is formed by the thrust ball bearing (32).

12. The brake according to claim 8, wherein the casing (30) of the actuator (11) is fixedly mounted relative to the vehicle, wherein the clamping cable (16, 17) passes through a wall of the casing (30) so as to be connected to the cursor (14), this clamping cable (16, 17) being engaged into a clamping sheath (36, 37) having an end pressing against the wall of the casing (30) via a mobile stop (39) resting on the clamping spring (27) so as to compress it against the wall, and wherein the mobile portion is formed by the mobile stop (39).

13. The brake according to claim 12, wherein the force returning cable (23) is connected to the mobile stop (39) via a plate (41) which is firmly attached to the mobile stop (39) by a detent mechanism.

14. The brake according to claim 12, wherein the mobile stop (39) is connected to an end of a crossbar (15) and wherein the force returning cable (23) is connected to another end of this crossbar (15).

15. The brake according to any of the preceding claims, wherein the actuator (11) is equipped with two end-of-travel switches (14', 14'') capable of cutting off the power supply of the motor (12) when the cursor (14) is at the end-of-travel clamping position or at the end-of-travel loosening position.

16. The brake according to claim 11, wherein the actuator casing comprises a clamping switch (9) and a loosening switch (8) actuated by the pallet (1) for actuating the actuator (11), wherein the force returning cable (23) is connected to the thrust ball bearing (32) via a force returning rod (33) and the force returning spring (25) which are located inside the casing (30), this force returning rod (33) comprising a lug (35) capable of closing the clamping switch or the loosening switch when it is moved longitudinally in the casing (30) by the force returning cable (23) when the user moves the pallet (1) towards the clamping position or towards the loosening position.

17. The brake according to any of claims 2 to 16, wherein the movement transmission chain comprises a force returning cable (23) with a first end connected to the mobile portion (14, 32, 41) of the actuator (11) and a second end connected to the force returning spring (25), this force returning spring (25) being connected to the pallet (1) via a link with sliding stops (45) and a second force returning cable (24).

18. The brake according to claim 17, wherein the link with sliding stops (45) comprises a fixed stop (46), a first sliding stop (47) attached to the force returning spring (25) and pressing against the fixed stop (46) when the pallet (1) is in the rest position or in the loosening position, a second sliding stop (48) fixed at the end of the second force returning cable (24), this second sliding stop (48) cooperating with the first sliding stop (47) to pull it when the pallet (1) is moved towards its clamping position.

19. The brake according to claim 18, comprising a loosening sensing spring (49) compressed between the second sliding stop (48) and a fixed portion of the vehicle, so that this loosening sensing spring (49) exerts on the pallet (1) a force which tends to bring it back to its rest position when the latter is moved towards its loosening position.

20. A control system, comprising a pallet (1) which may be moved by a user between a rest position and an active position in which this pallet (1) electrically actuates an actuator (11), an actuator (11) including a mobile portion (14, 32, 41) which it moves along a predetermined direction when it is actuated, **characterized in that** the pallet (1) is movably connected to the mobile portion (14, 32, 41) by a movement transmission chain including a force returning spring (25) in order to exert on the pallet (1) a force tending to bring it back towards its rest position, this force being all the more significant as the mobile portion (14, 32, 41) occupies an advanced position along the predetermined direction, so that maintaining the pallet (1) in the active position by the user requires a force all the more significant as the mobile portion (14, 32, 41) occupies an advanced position.

21. The control system according to claim 20, wherein the movement transmission chain comprises a force returning cable (23) having a first end connected to the pallet (1) and a second end connected to the force returning spring (25), the force returning spring (25) being connected to the mobile portion (14, 32, 41) of the actuator (11).

22. The control system according to claim 20, wherein the movement transmission chain comprises a force returning cable (23) with a first end connected to the mobile portion (14, 32, 41) if the actuator (11) and a second end connected to the force returning spring (25), this force returning spring (25) being connected to the pallet (1).

23. The control system according to claim 22, wherein the force returning spring (25) is connected to the pallet (1) via a second force returning cable (24).

## Patentansprüche

1. Elektrische Zweitbremse für ein Kraftfahrzeug, ein elektrisches Stellorgan (11) umfassend, das einen beweglichen Teil (14, 32, 41) einschließt, den dieses Stellorgan in eine Feststellrichtung genannte Richtung verschiebt, wenn es betätigt wird, um die Bremse anzuziehen, einen Handgriff (1), der von einem Benutzer zwischen einer Ruhestellung und einer Feststellstellung, in der er das Stellorgan elektrisch beansprucht, damit dieses die Bremse anzieht, verschoben werden kann, **dadurch gekennzeichnet, dass** der Handgriff (1) mit dem Stellorgan (11) durch eine Kraftrückführungsvorrichtung verbunden ist, wobei diese Vorrichtung auf der Handgriff (1) eine Kraft ausübt, die dazu neigt, ihn in Ruhestellung zurückzuführen, wobei diese Kraft um so größer ist, je mehr der bewegliche Teil eine in die Feststellrichtung vorgeschobene Stellung einnimmt.

2. Bremse nach Anspruch 1, wobei die Kraftrückführungsvorrichtung eine Kette zur Bewegungsübertragung ist, eine Kraftrückführungsfeder (25) einschließend, wobei diese Kette zur Bewegungsübertragung ein Ende hat, das mechanisch mit dem beweglichen Teil (14, 32, 41) des Stellorgans (11) verbunden ist, und ein anderes Ende, das mechanisch mit dem Handgriff (1) verbunden ist.

3. Bremse nach Anspruch 2, wobei die Kette zur Bewegungsübertragung ein Kraftrückführungskabel (23) umfasst, mit einem ersten Ende, das mit dem Handgriff (1) verbunden ist, und einem zweiten Ende, das mit der Kraftrückführungsfeder (25) verbunden ist, wobei die Kraftrückführungsfeder (25) mit dem beweglichen Teil (14, 32, 41) des Stellorgans (11) verbunden ist.

4. Bremse nach Anspruch 2, wobei die Kette zur Bewegungsübertragung ein Kraftrückführungskabel (23) umfasst, mit einem ersten Ende, das mit dem beweglichen Teil (14, 32, 41) des Stellorgans (11) verbunden ist, und einem zweiten Ende, das mit der Kraftrückführungsfeder (25) verbunden ist, wobei diese Kraftrückführungsfeder (25) mit dem Handgriff (1) verbunden ist.

5. Bremse nach Anspruch 4, wobei die Kraftrückführungsfeder (25) mit dem Handgriff (1) über ein zweites Kraftrückführungskabel (24) verbunden ist.

6. Bremse nach Anspruch 2, wobei die Kette zur Bewegungsübertragung ein Kraftrückführungskabel (23) umfasst, mit einem ersten Ende, das mit dem Handgriff (1) verbunden ist, und einem zweiten Ende, das mit dem beweglichen Teil (14, 32, 41) des Stellorgans (11) verbunden ist, wobei dieses Kraftrückführungskabel (23) in einem Schlauch geführt wird, mit einem ersten Ende, das sich gegen einen starren Teil des Fahrzeugs abstützt, und einem zweiten Ende, das sich gegen einen anderen starren Teil des Fahrzeugs über die Kraftrückführungsfeder (25) abstützt.

7. Bremse nach einem der vorangehenden Ansprüche, wobei der bewegliche Teil (14, 32, 41) vom Stellorgan (11) in eine andere, Löserichtung genannte Richtung verschoben werden kann, wenn dieses Stellorgan (11) zum Lösen der Bremse beansprucht wird, und wobei der Handgriff (1) vom Benutzer zwischen der Ruhestellung und einer Lösestellung verschoben werden kann, in der er das Stellorgan (11) elektrisch beansprucht, damit es die Bremse löst.

8. Bremse nach einem der vorangehenden Ansprüche, wobei das Stellorgan (11) ein Gehäuse (30) umfasst, in dem ein Motor (12) und eine Schnecke (13) montiert sind, die mit einer Welle dieses Motors (12) rotierend verbunden ist, einen Läufer (14), der mit der Schnecke (13) durch eine schneckenförmige Verbindung in Bewegung verbunden ist, wobei dieser Läufer (14) mit einem Feststellkabel (16, 17) der Bremse verbunden ist.

9. Bremse nach Anspruch 8, wobei das Gehäuse (30) des Stellorgans (11) in Bezug zum Fahrzeug starr befestigt ist, und wobei der bewegliche Teil des Stellmotors von dem Läufer (14) gebildet wird.

10. Bremse nach Anspruch 8, wobei das Gehäuse (30) des Stellorgans (11) beweglich befestigt ist, um den beweglichen Teil des Stellmotors zu bilden, wobei sich dieses Gehäuse (30) auf einem starren Teil des Fahrzeugs über eine Feststellfeder (27) abstützt.

11. Bremse nach Anspruch 8, wobei das Gehäuse (30) des Stellorgans (11) in Bezug zum Fahrzeug starr befestigt ist, wobei die Schnecke (13) ein Ende hat, das mit der Motorwelle (12) durch eine Gleitverbindung (28) in Bewegung verbunden ist, so dass sich diese Schnecke (13) längs in Bezug zum Gehäuse (30) verschieben kann, wobei sie von dem Motor (12) rotierend angetrieben wird, wobei das andere Ende dieser Schnecke (13) mit einem Druckkugellager (32) verbunden ist, das sich auf einem starren Teil des Fahrzeugs über eine Feststellfeder (27) abstützt, und wobei der bewegliche Teil des Stellorgans von dem Druckkugellager (32) gebildet wird.

12. Bremse nach Anspruch 8, wobei das Gehäuse (30) des Stellorgans (11) in Bezug zum Fahrzeug starr befestigt ist, wobei das Feststellkabel (16, 17) eine Wand des Gehäuses (30) durchquert, um mit dem Läufer (14) verbunden zu sein, wobei dieses Feststellkabel (16, 17) in einem Halteschlauch (36, 37) geführt wird, von dem sich ein Ende gegen die Wand des Gehäuses (30) über einen beweglichen Anschlag (39) abstützt, der sich auf der Feststellfeder (27) abstützt, um sie gegen die Wand zusammenzudrücken, und wobei der bewegliche Teil von dem beweglichen Anschlag (39) gebildet wird.

13. Bremse nach Anspruch 12, wobei das Kraftrückführungskabel (23) mit dem beweglichen Anschlag (39) über eine Platte (41) verbunden ist, die mit dem beweglichen Anschlag (39) durch Einrasten verbunden ist.

14. Bremse nach Anspruch 12, wobei der bewegliche Anschlag (39) mit einem Ende eines Hebels (15) verbunden ist, und wobei das Kraftrückführungskabel (23) mit einem anderen Ende dieses Hebels (15) verbunden ist.

15. Bremse nach einem der vorangehenden Ansprüche, wobei das Stellorgan (11) mit zwei Grenzlagenschaltern (14', 14'') verbunden ist, welche die Stromversorgung des Motors (12) unterbrechen können, wenn sich der Läufer (14) am Ende des Feststell-Laufs oder am Ende des Löse-Laufs befindet.

16. Bremse nach Anspruch 11, wobei das Stellorgangehäuse einen Feststellschalter (9) und einen Löseschalter (8) umfasst, die von dem Handgriff (1) betätigt werden, um das Stellorgan (11) zu beanspruchen, wobei das Kraftrückführungskabel (23) mit dem Druckkugellager (32) über eine Kraftrückführungsstange (33) und die Kraftrückführungsfeder (25) verbunden ist, die sich im Gehäuse (30) befinden, wobei diese Kraftrückführungsstange (33) einen Sporn (35) umfasst, der in der Lage ist, den Feststellschalter oder den Löseschalter zu schließen, wenn sie längs in dem Gehäuse (30) vom Kraftrückführungskabel (23) verschoben wird, wenn der Benutzer den Handgriff (1) in die Feststellstellung oder in die Lösestellung verschiebt.

17. Bremse nach einem der Ansprüche 2 bis 16, wobei die Kette zur Bewegungsübertragung ein Kraftrückführungskabel (23) umfasst, mit einem ersten, mit dem beweglichen Teil (14, 32, 41) des Stellorgans (11) verbundenen Ende und einem zweiten, mit der Kraftrückführungsfeder (25) verbundenen Ende, wobei dieses Kraftrückführungsfeder (25) mit dem Handgriff (1) über eine Verbindung mit gleitenden Anschlägen (45) verbunden ist und ein zweites Kraftrückführungskabel (24).

18. Bremse nach Anspruch 17, wobei die Verbindung mit gleitenden Anschlägen (45) einen starren Anschlag (46), einen ersten gleitenden Anschlag (47), der an der Kraftrückführungsfeder (25) befestigt ist und sich gegen den starren Anschlag (46) abstützt, wenn sich der Handgriff (1) in Ruhestellung oder in Lösestellung befindet, einen zweiten gleitenden Anschlag (48), der am Ende des zweiten Kraftrückführungskabels (24) befestigt ist, umfasst, wobei dieser zweite gleitende Anschlag (48) mit dem ersten gleitenden Anschlag (47) zusammenwirkt, um ihn zu ziehen, wenn der Handgriff (1) in seine Lösestellung verschoben wird.

19. Bremse nach Anspruch 18, eine Lösefühlfeder (49) umfassend, die zwischen dem zweiten gleitenden Anschlag (48) und einem starren Teil des Fahrzeugs komprimiert ist, so dass diese Lösefühlfeder (49) auf den Handgriff (1) eine Kraft ausübt, die dazu neigt, ihn in seine Ruhestellung zurückzuführen, wenn er in seine Lösestellung verschoben wird.

20. Steuersystem, einen Handgriff (1) umfassend, der von einem Benutzer zwischen einer Ruhestellung und einer aktiven Stellung verschoben werden kann, in der dieser Handgriff (1) elektrisch ein Stellorgan (11) beansprucht, ein Stellorgan (11), das einen beweglichen Teil (14, 32, 41) einschließt, den es in eine vorbestimmte Richtung verschiebt, wenn es beansprucht wird, **dadurch gekennzeichnet, dass** der Handgriff (1) mit dem beweglichen Teil (14, 32, 41) durch eine Kette zur Bewegungsübertragung in Bewegung verbunden ist, eine Kraftrückführungsfeder (25) einschließend, um auf den Handgriff (1) eine Kraft auszuüben, die dazu neigt, ihn in seine Ruhestellung zurückzuführen, wobei diese Kraft um so größer ist, je mehr der bewegliche Teil eine in die vorbestimmte Richtung vorgeschobene Stellung einnimmt, damit das Halten des Handgriffs (1) durch den Benutzer in aktiver Stellung eine Kraft verlangt, die um so größer ist, je mehr der bewegliche Teil (14, 32, 41) eine vorgeschobene Stellung einnimmt.

21. Steuersystem nach Anspruch 20, wobei die Kette zur Bewegungsübertragung ein Kraftrückführungskabel (23) umfasst, mit einem ersten, mit dem Handgriff (1) verbundenen Ende und einem zweiten, mit der Kraftrückführungsfeder (25) verbundenen Ende, wobei die Kraftrückführungsfeder (25) mit dem beweglichen Teil (14, 32, 41) des Stellorgans (11) verbunden ist.

22. Steuersystem nach Anspruch 20, wobei die Kette zur Bewegungsübertragung ein Kraftrückführungskabel (23) umfasst, mit einem ersten, mit dem beweglichen Teil (14, 32, 41) des Stellorgans (11) verbundenen Ende und einem zweiten, mit der Kraftrückführungsfeder (25) verbundenen Ende, wobei diese Kraftrückführungsfeder (25) mit dem Handgriff (1) verbunden ist.

23. Steuersystem nach Anspruch 22, wobei die Kraftrückführungsfeder (25) mit dem Handgriff (1) über ein zweites Kraftrückführungskabel (24) verbunden ist.
